# EUROPEAN PATENT SPECIFICATION

(11) **EP 4 152 208 B1**
(45) Date of publication and mention of the grant of the patent: **02.12.2026**
(21) Application number: 22188218.6
(22) Date of filing: 02.08.2022
(51) Int. Cl.: G06K 19/077, H01Q 1/22

(54) **CHIP PACKAGING STRUCTURE**
CHIP-VERPACKUNGSSTRUKTUR
STRUCTURE D'ENCAPSULATION DE PUCE

(30) Priority: 16.09.2021 US 202163245090 P; 21.06.2022 TW 111123125
(43) Date of publication of application: 22.03.2023
(73) Proprietor: SES RFID Solutions GmbH, 40489 Düsseldorf (DE)
(72) Inventor: LIAW, Shao-Lun, 407 Taichung City (TW); LI, Yu-Cheng, 427 Taichung City (TW)
(74) Representative: Viering, Jentschura & Partner mbB Patent- und Rechtsanwälte

(56) References cited:
- EP-A1- 1 798 074
- WO-A1-01/36220
- WO-A1-2019/123118

## Description

### Background of the Invention

### 1. Field of the Invention

The present invention relates generally to packaging chips, and more particularly to a chip packaging structure, referring to a new type of identification tag for a tire, wherein the structure of the identification tag uses a thermoplastic package to couple a chip and an antenna. Said thermoplastic package tends to be merged with rubber during the tire vulcanization process, which would form no sharp shape to damage the tire.

### 2. Description of the Prior Art

The radio frequency identification (RFID) technology is widely used in the automotive industry. Instead of using wired sensors, a common implementation in the industry is to implant RF tags in tires. In addition, RF tags can be also used in tracking other automobile parts. Simply by installing RF tag readers at specific locations such as toll booths or checkpoints, the usage and operating condition of relevant parts can be easily tracked. However, automobiles usually operate in an environment of high temperature and high pressure, and therefore the RF tags implanted inside tires or all kinds of automobile parts require excellent durability, which is an ongoing goal of improvement for the industry.
WO 01/36220 A1 discloses a chip packaging structure, comprising: a chip module, and a main body (bobbin) comprising a first outer circumferential side as first portion, a middle section as a second portion, and am opening that might serve as a holding portion, wherein the second portion protrudes from the first portion, and a size of the second portion is smaller in diameter than a size of the first portion; the opening is located at the second portion; wherein the chip module is placed at the opening to be engaged with the main body.
EP 1 798 074 A1 discloses a method for mounting transponder on pneumatic tire.
WO 2019/123118 A1 discloses a tyre monitoring device comprising an electronic unit and tyre comprising said device.

### Summary of the Invention

The present invention is defined in the appended claims.

In view of the situation mentioned above, the present invention provides a chip packaging structure, which could enhance the durability of a packaged chip, and therefore would be more suitable for the automotive industry.

The chip packaging structure provided in the present invention has better durability, can be applied in an environment of high temperature and high pressure, and is not easily damaged.

### Brief Description of the Drawings

The present invention will be best understood by referring to the following detailed description of one illustrative embodiment in conjunction with the accompanying drawings, in which
FIG. 1 is a perspective view of the chip packaging structure of a first embodiment of the present invention;
FIG. 2 is an exploded view of the chip packaging structure of the first embodiment of the present invention, showing how the chip module and the main body are engaged, wherein the elongated antenna is omitted;
FIG. 3 is an exploded view of the chip packaging structure of a second embodiment of the present invention, showing another way of engaging the chip module and the main body, wherein the elongated antenna is omitted, too;
FIG. 4 is a perspective view of the chip packaging structure of a third embodiment of the present invention;
FIG. 5 is an exploded view of the chip packaging structure of the third embodiment of the present invention, showing how the chip module and the main body are engaged, wherein the elongated antenna is also omitted;
FIG. 6 is an exploded view of the chip packaging structure of a fourth embodiment of the present invention;
FIG. 7 is a top view of the chip packaging structure of the fourth embodiment, wherein the chip module and the elongated antenna are both omitted;
FIG. 8 is a top view of another implementation of the chip packaging structure of the fourth embodiment of the present invention, where in the chip module and the elongated antenna are omitted as well; and
FIG. 9 is a top view of the chip packaging structure of a fifth embodiment of the present invention.

### Detailed Description

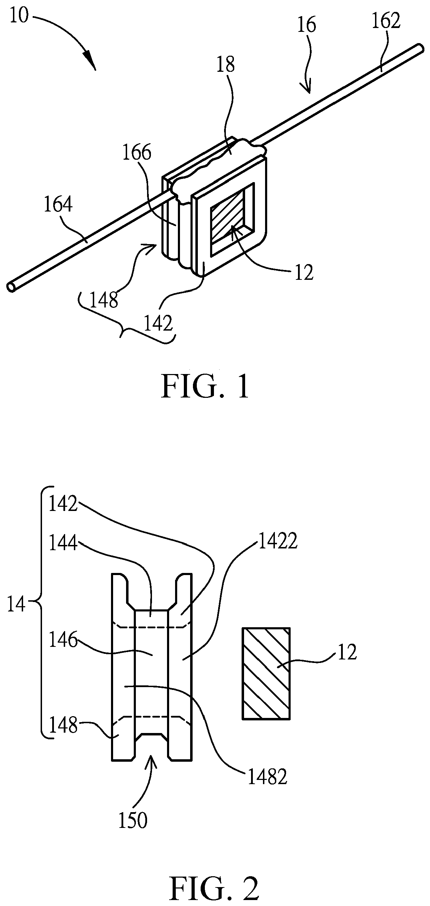

A chip packaging structure 10 of a first embodiment of the present invention is shown in FIG. 1 and FIG. 2, which includes a chip module 12, a main body 14, an elongated antenna 16, and an adhesive member 18. It should be noted that, the chip module 12 usually includes a miniature antenna and a radio frequency identification chip connected to each other; however, since the interior structure of the chip module 12 is not the key feature of the present invention, the miniature antenna and the radio frequency identification chip are not illustrated in any drawings of the present invention and are not limitations of the present invention. Basically, any chip modules that meet the general understating in this industry should be deemed equivalent to the chip module 12 described in the present invention. This principle also applies in other embodiments.

As shown in FIG. 1 and FIG. 2, the main body 14 of the chip packaging structure 10 includes a first portion 142, a second portion 144, a third portion 148, and a holding portion 146. The second portion 144 protrudes from the first portion 142. A size of the second portion 144 is smaller than a size of the first portion 142. The third portion 148 is connected to the second portion 144, and is located on a side opposite to the first portion 142. Furthermore, a size of the third portion 148 is also greater than the size of the second portion 144. In the current embodiment, the holding portion 146 of the main body 14 is in the second portion 144. The first portion 142 has a through hole 1422, while the third portion also has a through hole 1482. These through holes 1422, 1482 respectively communicate with the holding portion 146. The chip module 12 is engaged with the main body 14 by placing at the holding portion 146. More specifically, the chip module 12 is placed in the holding portion 146 through the through hole 1422 or the through hole 1482, whereby to be engaged in the main body 14.

The elongated antenna 16 includes a first extending portion 162, a second extending portion 164, and a winding portion 166. The first extending portion 162 is connected to the winding portion 166, the second extending portion 164 is connected to the winding portion 166, and the winding portion 166 winds around the main body 14. Since the size of the second portion 144 of the main body 14 is smaller than those of the first portion 142 and the third portion 148, the main body 14 has a slot 150 formed on an outer surface thereof, wherein the slot 150 could accommodate the winding portion 166 of the elongated antenna 16. With this design, the winding portion 166 could wind along the slot 150. It should be clarified that, the way the winding portion 166 winds around the main body 14 shown in the drawings is merely an example, and so are the shapes of the extending portions 162, 164. These examples are not limitations of the present invention. In other words, in other embodiments, the shapes of the extending portions 162, 164 could be irregular, and there is no specific limit on the number of winding turns of the winding portion 166. In addition, the slot 150 could be designed to have a cross-sectional shape of a semicircular arc, a rectangle, or a polygon as required.

The adhesive member 18 is used to bond the winding portion 166 of the elongated antenna 16 and the main body 14 together, whereby to ensure that the elongated antenna 16 and the main body 14 are firmly engaged. To provide a basic bonding function, the adhesive member 18 should cover at least a part of at least a surface of the main body 14. However, in other examples (not having a features of claim 1), if the winding portion 166 of the elongated antenna 16 could firmly wind around the main body 14 on its own, without the risk of falling off, the adhesive member 18 surely could be omitted.

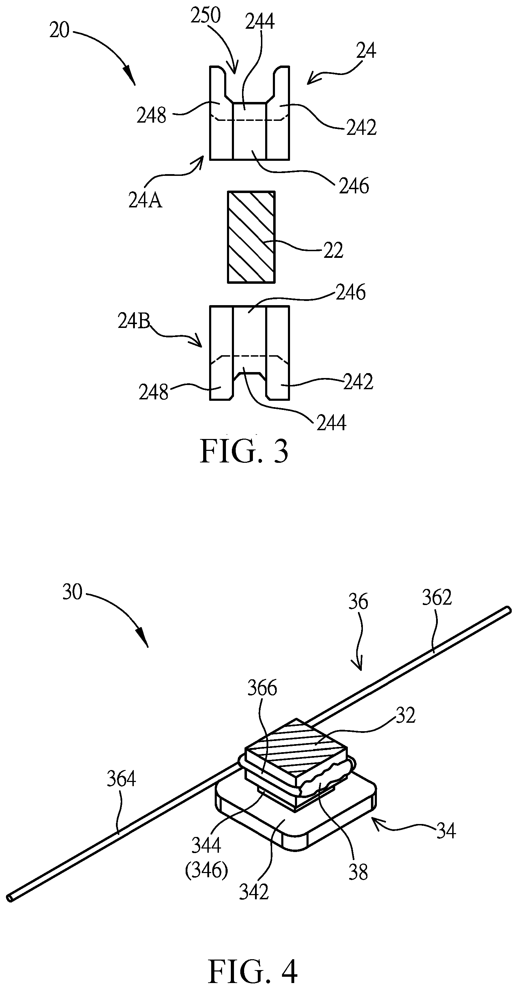

Please refer to FIG. 3, which illustrates a chip packaging structure 20 of a second embodiment of the present invention. The same as the first embodiment, the chip packaging structure 20 also includes a chip module 22 and a main body 24 (the elongated antenna and the adhesive member are omitted in this drawing). The main body 24 also includes a first portion 242, a second portion 244, a holding portion 246, and a third portion 248. A size of the first portion 242 and a size of a third portion 248 are both greater than a size of the second portion 244, so that the main body 24 has a slot 250 formed on an outer surface thereof. The slot 250 allows the winding portion of the elongated antenna (not shown) to wind thereabout. In addition, the holding portion 246 is also located in the second portion 244 to accommodate the chip module 22. The current embodiment is different from the previous embodiment in that the main body 24 further includes a first shell 24A and a second shell 24B. The first shell 24A and the second shell 24B are correspondingly engaged with each other to form the abovementioned first portion 242, second portion 244, third portion 248, and holding portion 246 inside the second portion 244. Through this corresponding engagement, the chip module 22 no longer needs to go through the through holes on the first portion 242 or the third portion 248 to be placed inside the holding portion 246. In other words, in the current embodiment, the chip module 22 and the main body 24 could be engaged together whether the first portion 242 and the third portion 248 are provided with through holes or not.

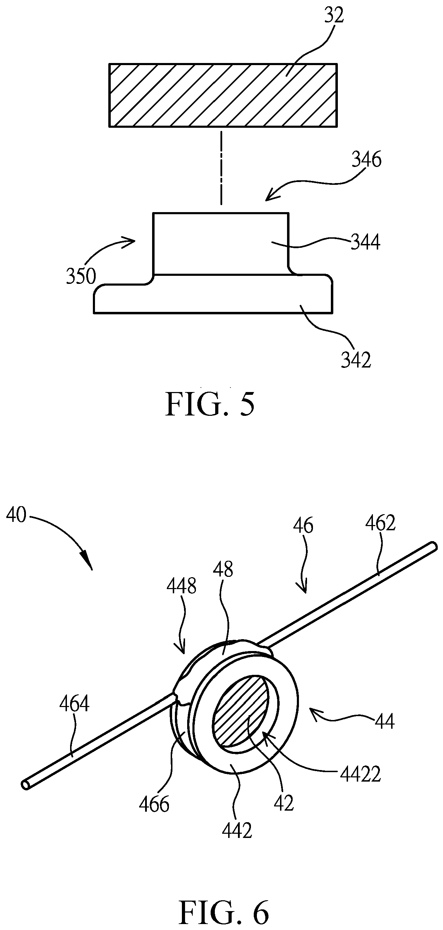

Please refer to FIG. 4 and FIG. 5, which illustrate a chip packaging structure 30 of a third embodiment of the present invention. The same with the previous two embodiments, the chip packaging structure 30 includes a chip module 32, a main body 34, an elongated antenna 36, and an adhesive member 38, wherein the main body 34 also includes a first portion 342, a second portion 344, and a holding portion 346. The second portion 344 of the main body 34 protrudes from the first portion 342, and a size of the first portion 342 is greater than a size of the second portion 344. The current embodiment is different from the previous embodiments in that the main body 34 does not have a third portion. Therefore, the size relation of the first portion 342 and the second portion 344 makes the main body 34 have a slot 350 formed on an outer surface thereof, wherein the slot 350 only has one slot wall.

In the current embodiment, the holding portion 346 is not in the second portion 344, but is on a side of the second portion 344 away from the first portion 342. The chip module 32 is engaged with the main body 34 by being placed on the holding portion 346. The elongated antenna 36 includes a first extending portion 362, a second extending portion 364, and a winding portion 366. The first extending portion 362 is connected to the winding portion 366, the second extending portion 364 is connected to the winding portion 366, and the winding portion 366 winds around the chip module 32 placed on the holding portion 346. The adhesive member 38 covers at least a part of at least a surface of the chip module 32. Whereby, the winding portion 366 of the elongated antenna 36 and the chip module 32 are bound together. It has to be clarified that the shapes of the extending portions 362, 364 are not limited to what is shown in the drawings. The number of winding turns of the winding portion 366 is not a limitation of the present invention, either. In addition, in other embodiments, the winding portion 366 of the elongated antenna 36 could, as described in the previous embodiments, wind around the main body 34 along the slot 350 formed on the outer surface of the main body 34, and is not limited to the implementation described here.

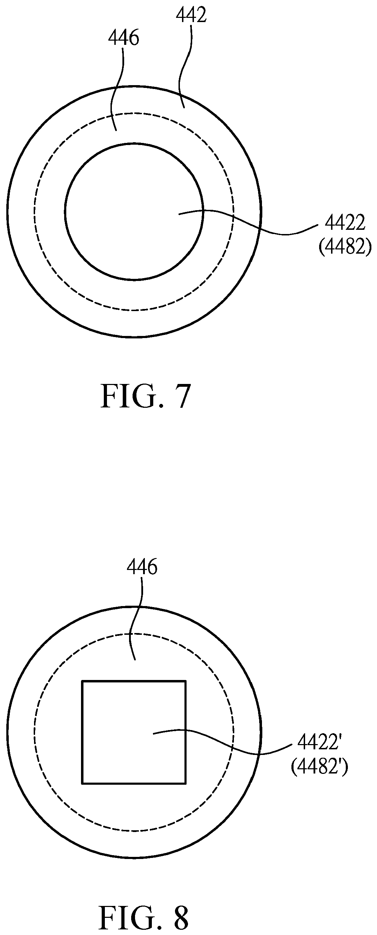

FIG. 6 and FIG. 7 show a chip packaging structure 40 of a fourth embodiment of the present invention. The structure thereof is basically the same as that of the first embodiment, which means that the chip packaging structure 40 also includes a chip module 42, a main body 44, an elongated antenna 46, and an adhesive member 48. However, an appearance of the main body 44 is round, which is different from the rectangular design seen in the first embodiment. More specifically, the round main body 44 also includes a first portion 442, a second portion 446, a third portion 448, and a holding portion, wherein the second portion 446 protrudes from the first portion 442, and the third portion 448 is connected to the second portion 446 on a side opposite to the first portion 442. A size of the second portion 446 is smaller than sizes of the first portion 442 and the third portion 448, so that the main body 42 has a circular slot formed on an outer surface thereof. The elongated antenna 46 includes a first extending portion 462, a second extending portion 464, and a winding portion 466, wherein the first extending portion 462 and the second extending portion 464 are respectively connected to opposite sides of the winding portion 466. The winding portion 466 winds around the main body 44 along the circular slot on the outer surface of the main body 42. The adhesive member 48 is also adapted to bond the winding portion 466 of the elongated antenna 46 and the main body 42, and at least covers a part of the outer surface of the main body 42.

It should be noted that the winding portion 466 of the wire antenna 46 is substantially wound into a circle, in line with the appearance of the main body 42. However, in other embodiments (like in the previous embodiments), the winding portion 466 of the elongated antenna 46 could be substantially wound in a rectangle. In the current embodiment, a through hole 4422 provided on the first portion 442 of the main body 44, the holding portion inside the second portion 446, and a through hole 4482 provided on the third portion 448 all have a round cross-sectional shape. However, this is not a limitation of the present invention. Please refer to FIG. 8, which illustrates another implementation of the current embodiment. A through hole 4422' provided on the first portion 442 of the main body 44, the holding portion inside the second portion 446, and another through hole 4482' provided on the third portion 448 all have a cross-sectional shape of a rectangle. While comparing with the embodiments mentioned above (for example, the first embodiment), it should be understood that the first portion 142, 442 and the third portion 148, 448 of the main body 14, 44 of the chip packaging structure of the present invention can have a shape different from the shapes described herein. In addition to a circle or a rectangle, other shapes not shown in the drawings of the present invention should not be excluded, either.

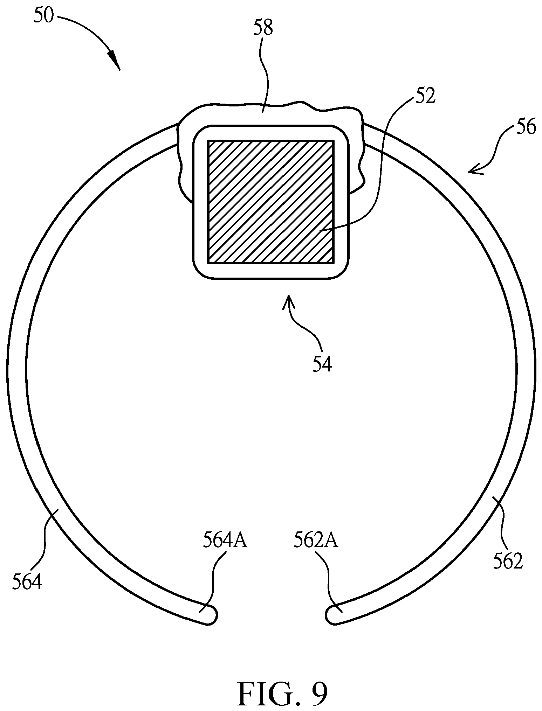

Finally, please refer to FIG. 9, which illustrates a chip packaging structure 50 of a fifth embodiment of the present invention, including a chip module 52, a main body 54, an elongated antenna 56, and an adhesive member 58. The structural relations of these components are roughly the same as mentioned in the previous embodiments, wherein the elongated antenna 56 also has a first extending portion 562 and a second extending portion 564. A primary difference is that an end 562A of the first extending portion 562 and an end 564A of the second extending portion 564, which are away from the winding portion, are adjacent to each other. In other words, in the current embodiment, the elongated antenna 56 is roughly a loop antenna without composing a complete ring. However, what is shown here is merely an example. In other embodiments, the end 562A and the end 564A could be substantially connected, making the elongated antenna 56 form a complete ring.

It is worth mentioning that, in each of the abovementioned embodiments, the main body 14, 24, 34, 44, 54 is made of a thermoplastic flexible member. More specifically, the thermoplastic flexible member is selected from flexible plastics of Shore A or D hardness, and a melting point thereof is lower than the temperature required for the tire vulcanization process. By using such a material, the main body 14, 24, 34, 44, 54 of the chip packaging structure 10, 20, 30, 40, 50 of the present invention will melt during the tire vulcanization process. Therefore, if the chip packaging structure 10, 20, 30, 40, 50 of the present invention is applied inside a tire, the melted main body 14, 24, 34, 44, 54 would at least provide the following two advantages:

1. The main body 14, 24, 34, 44, 54 would be fused with the tire at least at edges thereof, and therefore once the tire is molded, the structure formed by the tire and the main body 14, 24, 34, 44, 54 could have a more homogeneous material, reducing the sharpness of the corners and edges of the main body 14, 24, 34, 44, 54; and

2. Some of the threads of the tire would be wrapped around the main body 14, 24, 34, 44, 54 which has been fused with the tire, and, since the main body 14, 24, 34, 44, 54 is fused with the tire at least at the edges thereof, these threads and the chip module 12, 22, 32, 42, 52 inside the chip packaging structure 10, 20, 30, 40, 50 of the present invention would have a better coupling effect.

According to the above descriptions, the chip packaging structures 10, 20, 30, 40, 50 of the present invention could provide better durability, and would be especially suitable for the interior of a tire and all kinds of applications in the automobile industry.

## Claims

1. A chip packaging structure (10, 20, 30, 40, 50), comprising a chip module (12, 22, 32,42, 52); and a main body (14, 24, 34, 44, 54), wherein the main body (14, 24, 34, 44, 54) is configured to comprise
a first portion (142, 242, 342, 442), a second portion (144, 244, 344, 444), and a holding portion (146, 246, 346), wherein the second portion (144, 244, 344, 444) is configured to protude from the first portion (142, 242, 342, 442), and a size of the second portion (144, 244, 344, 444) is smaller than a size of the first portion (142, 242, 342, 442); the holding portion (146, 246, 346) is configured to be located at the second portion (144, 244, 344, 444); wherein the chip module (12, 22, 32,42, 52) is configured to be placed at the holding portion (146, 246, 346) to be engaged with the main body (14, 24, 34, 44, 54);
wherein the chip packaging structure (10, 20, 40, 50) is further configured to comprise an elongated antenna (16, 36, 46, 56), wherein the elongated antenna (16, 36, 46, 56) is configured to comprise a first extending portion (162, 362, 462, 562), a second extending portion (164, 364, 464, 564), and a winding portion (166, 366, 466); the first extending portion (162, 362, 462, 562) is configured to be connected to the winding portion (166, 366, 466), the second extending portion (164, 364, 464, 564) is configured to be connected to the winding portion (166, 366, 466), and the winding portion (166, 366, 466) is configured to wind around the second portion (144, 244, 444) of the main body (14, 24, 44, 54);
the chip packaging structure (10, 20, 40, 50) is further configured to comprise an adhesive member (18, 48, 58) adapted to bond the winding portion (166, 466) of the elongated antenna (16, 46, 56) to the main body (14, 24, 44, 54), wherein the adhesive member (18, 48, 58) is characterised to be configured to cover a portion of the winding portion (166, 366, 466) of the elongated antenna (16, 36, 46, 56) and a part of a side of the main body (14, 24, 44, 54).

2. The chip packaging structure (30) of claim 1, wherein the holding portion (346) of the main body (34) is located at a side of the second portion (344) away from the first portion (342), and the chip module (32) is placed on the holding portion (346).

3. The chip packaging structure (30) of claim 2, further comprising an elongated antenna (36), wherein the elongated antenna (36) comprises a first extending portion (362), a second extending portion (364), and a winding portion (366); the first extending portion (362) is connected to the winding portion (366), the second extending portion (364) is connected to the winding portion (366), and the winding portion (366) winds around the chip module (32).

4. The chip packaging structure (30) of claim 3, further comprising an adhesive member (38) adapted to bond the winding portion (366) of the elongated antenna (36) to the chip module (32), wherein the adhesive member (38) covers at least a part of at least a side of the chip module (32).

5. The chip packaging structure (10, 20, 40, 50) of claim 1, wherein the main body (14, 24, 44, 54) further comprises a third portion (148, 248, 448), wherein the third portion (148, 248, 448) is connected to the second portion (144, 244, 444), and is located at a side opposite to the first portion (142, 242, 442); a size of the third portion (148, 248, 448) is greater than the size of the second portion (144, 244, 444); the holding portion (146, 246) of the main body (14, 24, 44) is located in the second portion (144, 244, 444); each of the first portion (142, 242, 442) and the third portion (148, 248, 448) has a through hole (1422, 1482, 4422, 4422', 4482, 4482') communicating with the holding portion (146, 246); the chip module (12, 22, 42, 52) is placed in the holding portion (146, 246).

6. The chip packaging structure (20) of claim 5, wherein the main body (24) comprises a first shell (24A) and a second shell (24B); the first shell (24A) and the second shell (24B) are correspondingly engaged to form the first portion (242), the second portion (244), the third portion (248), and the holding portion (246) inside the holding portion (246).

7. The chip packaging structure (50) of claim 1, wherein an end (562A) of the first extending portion (562) and an end (564A) of the second extending portion (564) which are away from the winding portion of the elongated antenna (56) are adjacent to each other.

8. The chip packaging structure (10, 20, 40, 50) of claim 1, wherein the winding portion (166, 466) of the elongated antenna (16, 46, 56) is substantially rectangular or round.

9. The chip packaging structure (10, 20, 40, 50) of claim 5, wherein an appearance of the first portion (142, 242, 442) and an appearance of the third portion (148, 248, 448) of the main body (14, 24, 44, 54) are rectangular or round.

10. The chip packaging structure (10, 20, 40, 50) of claim 5, wherein the through hole (1422, 4422, 4422') of the first portion (142, 242, 442), the holding portion (146, 246) located inside the second portion (144, 244, 444), and the through hole (1482, 4482, 4482') of the third portion (148, 248, 448) all have a cross-sectional shape of a rectangle or a circle.

11. The chip packaging structure (10, 20, 40, 50) of claim 5, wherein the first portion (142, 242, 442), the second portion (144, 244, 444), and the third portion (148, 248, 448) together form a slot (150, 250) adapted to accommodate the winding portion (166, 466) of the elongated antenna (16, 46); the slot (150, 250) has a cross-sectional shape of a semicircular arc, a rectangle, or a polygon.

12. The chip packaging structure (10, 20, 30, 40, 50) of claim 1, wherein the main body (14, 24, 34, 44, 54) is made of a thermoplastic flexible member, which melts during a vulcanization process, reducing a sharpness of corners and edges of the main body (14, 24, 34, 44, 54).

13. The chip packaging structure (10, 20, 30, 40, 50) of claim 12, wherein the thermoplastic flexible member is selected from flexible plastics of Shore A or D hardness.

## Patentansprüche

1. Chip-Verpackungsstruktur (10, 20, 30, 40, 50), aufweisend ein Chipmodul (12, 22, 32, 42, 52) und einen Hauptkörper (14, 24, 34, 44, 54), wobei der Hauptkörper (14, 24, 34, 44, 54) konfiguriert ist, um einen ersten Abschnitt (142, 242, 342, 442), einen zweiten Abschnitt (144, 244, 344, 444) und einen Halteabschnitt (146, 246, 346) aufzuweisen, wobei der zweite Abschnitt (144, 244, 344, 444) konfiguriert ist, um von dem ersten Abschnitt (142, 242, 342, 442) hervorzustehen, und eine Größe des zweiten Abschnitts (144, 244, 344, 444) kleiner als eine Größe des ersten Abschnitts (142, 242, 342, 442) ist; der Halteabschnitt (146, 246, 346) konfiguriert ist, um sich am zweiten Abschnitt (144, 244, 344, 444) zu befinden; wobei das Chipmodul (12, 22, 32, 42, 52) konfiguriert ist, um am Halteabschnitt (146, 246, 346) platziert zu sein, um mit dem Hauptkörper (14, 24, 34, 44, 54) in Eingriff zu gelangen;
wobei die Chip-Verpackungsstruktur (10, 20, 40, 50) ferner konfiguriert ist, um eine langgestreckte Antenne (16, 36, 46, 56) aufzuweisen, wobei die langgestreckte Antenne (16, 36, 46, 56) konfiguriert ist, um einen ersten Erstreckungsabschnitt (162, 362, 462, 562), einen zweiten Erstreckungsabschnitt (164, 364, 464, 564) und einen Wickelabschnitt (166, 366, 466) aufzuweisen; der erste Erstreckungsabschnitt (162, 362, 462, 562) konfiguriert ist, um mit dem Wickelabschnitt (166, 366, 466) verbunden zu sein, der zweite Erstreckungsabschnitt (164, 364, 464, 564) konfiguriert ist, um mit dem Wickelabschnitt (166, 366, 466) verbunden zu sein, und der Wickelabschnitt (166, 366, 466) konfiguriert ist, um sich um den zweiten Abschnitt (144, 244, 444) des Hauptkörpers (14, 24, 44, 54) zu wickeln;
die Chip-Verpackungsstruktur (10, 20, 40, 50) ferner konfiguriert ist, um ein Klebeelement (18, 48, 58) aufzuweisen, das angepasst ist, um den Wickelabschnitt (166, 466) der langgestreckten Antenne (16, 46, 56) mit dem Hauptkörper (14, 24, 44, 54) zu verbinden, wobei das Klebeelement (18, 48, 58) **dadurch gekennzeichnet ist, dass** es konfiguriert ist, um einen Abschnitt des Wickelabschnitts (166, 366, 466) der langgestreckten Antenne (16, 46, 56) und einen Teil einer Seite des Hauptkörpers (14, 24, 44, 54) zu bedecken.

2. Chip-Verpackungsstruktur (30) gemäß Anspruch 1, wobei sich der Halteabschnitt (346) des Hauptkörpers (34) an einer Seite des zweiten Abschnitts (344) weg vom ersten Abschnitt (342) befindet und das Chipmodul (32) auf dem Halteabschnitt (346) platziert ist.

3. Chip-Verpackungsstruktur (30) gemäß Anspruch 2, ferner aufweisend eine langgestreckte Antenne (36), wobei die langgestreckte Antenne (36) einen ersten Erstreckungsabschnitt (362), einen zweiten Erstreckungsabschnitt (364) und einen Wickelabschnitt (366) aufweist; der erste Erstreckungsabschnitt (362) mit dem Wickelabschnitt (366) verbunden ist, der zweite Erstreckungsabschnitt (364) mit dem Wickelabschnitt (366) verbunden ist und sich der Wickelabschnitt (366) um das Chipmodul (32) wickelt.

4. Chip-Verpackungsstruktur (30) gemäß Anspruch 3, ferner aufweisend ein Klebeelement (38), das angepasst ist, den Wickelabschnitt (366) der langgestreckten Antenne (36) mit dem Chipmodul (32) zu verbinden, wobei das Klebeelement (38) mindestens einen Teil von mindestens einer Seite des Chipmoduls (32) bedeckt.

5. Chip-Verpackungsstruktur (10, 20, 40, 50) gemäß Anspruch 1, wobei der Hauptkörper (14, 24, 44, 54) ferner einen dritten Abschnitt (148, 248, 448) aufweist, wobei der dritte Abschnitt (148, 248, 448) mit dem zweiten Abschnitt (144, 244, 444) verbunden ist und sich auf einer dem ersten Abschnitt (142, 242, 442) gegenüberliegenden Seite befindet; eine Größe des dritten Abschnitts (148, 248, 448) größer als die Größe des zweiten Abschnitts (144, 244, 444) ist; der Halteabschnitt (146, 246) des Hauptkörpers (14, 24, 44) sich im zweiten Abschnitt (144, 244, 444) befindet; jeder von dem ersten Abschnitt (142, 242, 442) und dem dritten Abschnitt (148, 248, 448) ein Durchgangsloch (1422, 1482, 4422, 4422', 4482, 4482') aufweist, das mit dem Halteabschnitt (146, 246) kommuniziert; das Chipmodul (12, 22, 42, 52) in dem Halteabschnitt (146, 246) platziert ist.

6. Chip-Verpackungsstruktur (20) gemäß Anspruch 5, wobei der Hauptkörper (24) eine erste Hülle (24A) und eine zweite Hülle (24B) aufweist; die erste Hülle (24A) und die zweite Hülle (24B) korrespondierend in Eingriff sind, um den ersten Abschnitt (242), den zweiten Abschnitt (244), den dritten Abschnitt (248) und den Halteabschnitt (246) innerhalb des Halteabschnitts (246) auszubilden.

7. Chip-Verpackungsstruktur (50) gemäß Anspruch 1, wobei ein Ende (562A) des ersten Erstreckungsabschnitts (562) und ein Ende (564A) des zweiten Erstreckungsabschnitts (564), die vom Wickelabschnitt der langgestreckten Antenne (56) entfernt sind, benachbart zueinander sind.

8. Chip-Verpackungsstruktur (10, 20, 40, 50) gemäß Anspruch 1, wobei der Wickelabschnitt (166, 466) der langgestreckten Antenne (16, 46, 56) im Wesentlichen rechteckig oder rund ist.

9. Chip-Verpackungsstruktur (10, 20, 40, 50) gemäß Anspruch 5, wobei ein Erscheinungsbild des ersten Abschnitts (142, 242, 442) und ein Erscheinungsbild des dritten Abschnitts (148, 248, 448) des Hauptkörpers (14, 24, 44, 54) rechteckig oder rund sind.

10. Chip-Verpackungsstruktur (10, 20, 40, 50) gemäß Anspruch 5, wobei das Durchgangsloch (1422, 4422, 4422') des ersten Abschnitts (142, 242, 442), der Halteabschnitt (146, 246), der sich innerhalb des zweiten Abschnitts (144, 244, 444) befindet, und das Durchgangsloch (1482, 4482, 4482') des dritten Abschnitts (148, 248, 448) alle eine Querschnittsform eines Rechtecks oder eines Kreises haben.

11. Chip-Verpackungsstruktur (10, 20, 40, 50) gemäß Anspruch 5, wobei der erste Abschnitt (142, 242, 442), der zweite Abschnitt (144, 244, 444) und der dritte Abschnitt (148, 248, 448) zusammen einen Schlitz (150, 250) ausbilden, der angepasst ist, um den Wickelabschnitt (166, 466) der langgestreckten Antenne (16, 46) aufzunehmen; wobei der Schlitz (150, 250) eine Querschnittsform eines Halbkreisbogens, eines Rechtecks oder eines Polygons hat.

12. Chip-Verpackungsstruktur (10, 20, 30, 40, 50) gemäß Anspruch 1, wobei der Hauptkörper (14, 24, 34, 44, 54) aus einem thermoplastischen flexiblen Element hergestellt ist, das während eines Vulkanisierungsprozesses schmilzt, wodurch eine Schärfe von Ecken und Kanten des Hauptkörpers (14, 24, 34, 44, 54) verringert wird.

13. Chip-Verpackungsstruktur (10, 20, 30, 40, 50) gemäß Anspruch 12, wobei das thermoplastische flexible Element aus flexiblen Kunststoffen mit einer Shore-A- oder Shore-D-Härte ausgewählt ist.

## Revendications

1. Structure d'encapsulation de puce (10, 20, 30, 40, 50), comprenant un module de puce (12, 22, 32, 42, 52) ; et un corps principal (14, 24, 34, 44, 54), dans laquelle le corps principal (14, 24, 34, 44, 54) est configuré pour comprendre une première partie (142, 242, 342, 442), une deuxième partie (144, 244, 344, 444) et une partie de maintien (146, 246, 346), dans laquelle la deuxième partie (144, 244, 344, 444) est configurée pour faire saillie à partir de la première partie (142, 242, 342, 442), et une taille de la deuxième partie (144, 244, 344, 444) est inférieure à une taille de la première partie (142, 242, 342, 442) ; la partie de maintien (146, 246, 346) est configurée pour être située au niveau de la deuxième partie (144, 244, 344, 444) ; dans laquelle le module de puce (12, 22, 32, 42, 52) est configuré pour être placé au niveau de la partie de maintien (146, 246, 346) afin de venir en prise avec le corps principal (14, 24, 34, 44, 54) ;
dans laquelle la structure d'encapsulation de puce (10, 20, 40, 50) est en outre configurée pour comprendre une antenne allongée (16, 36, 46, 56), dans laquelle l'antenne allongée (16, 36, 46, 56) est configurée pour comprendre une première partie d'extension (162, 362, 462, 562), une deuxième partie d'extension (164, 364, 464, 564) et une partie d'enroulement (166, 366, 466) ; la première partie d'extension (162, 362, 462, 562) est configurée pour être reliée à la partie d'enroulement (166, 366, 466), la deuxième partie d'extension (164, 364, 464, 564) est configurée pour être reliée à la partie d'enroulement (166, 366, 466), et la partie d'enroulement (166, 366, 466) est configurée pour s'enrouler autour de la deuxième partie (144, 244, 444) du corps principal (14, 24, 44, 54) ;
la structure d'encapsulation de puce (10, 20, 40, 50) est en outre configurée pour comprendre un élément adhésif (18, 48, 58) adapté pour lier la partie d'enroulement (166, 466) de l'antenne allongée (16, 46, 56) au corps principal (14, 24, 44, 54), dans laquelle l'élément adhésif (18, 48, 58) est **caractérisé en ce qu'**il est configuré pour recouvrir une partie de la partie d'enroulement (166, 366, 466) de l'antenne allongée (16, 46, 56) et une partie d'un côté du corps principal (14, 24, 44, 54).

2. Structure d'encapsulation de puce (30) selon la revendication 1, dans laquelle la partie de maintien (346) du corps principal (34) est située sur un côté de la deuxième partie (344) éloigné de la première partie (342), et le module de puce (32) est placé sur la partie de maintien (346).

3. Structure d'encapsulation de puce (30) selon la revendication 2, comprenant en outre une antenne allongée (36), dans laquelle l'antenne allongée (36) comprend une première partie d'extension (362), une deuxième partie d'extension (364) et une partie d'enroulement (366) ; la première partie d'extension (362) est reliée à la partie d'enroulement (366), la deuxième partie d'extension (364) est reliée à la partie d'enroulement (366), et la partie d'enroulement (366) s'enroule autour du module de puce (32).

4. Structure d'encapsulation de puce (30) selon la revendication 3, comprenant en outre un élément adhésif (38) adapté pour lier la partie d'enroulement (366) de l'antenne allongée (36) au module de puce (32), dans laquelle l'élément adhésif (38) recouvre au moins une partie d'au moins un côté du module de puce (32).

5. Structure d'encapsulation de puce (10, 20, 40, 50) selon la revendication 1, dans laquelle le corps principal (14, 24, 44, 54) comprend en outre une troisième partie (148, 248, 448), dans laquelle la troisième partie (148, 248, 448) est reliée à la deuxième partie (144, 244, 444) et est située sur un côté opposé à la première partie (142, 242, 442) ; une taille de la troisième partie (148, 248, 448) est supérieure à la taille de la deuxième partie (144, 244, 444) ; la partie de maintien (146, 246) du corps principal (14, 24, 44) est située dans la deuxième partie (144, 244, 444) ; chacune de la première partie (142, 242, 442) et de la troisième partie (148, 248, 448) comporte un trou traversant (1422, 1482, 4422, 4422', 4482, 4482') communiquant avec la partie de maintien (146, 246) ; le module de puce (12, 22, 42, 52) est placé dans la partie de maintien (146, 246).

6. Structure d'encapsulation de puce (20) selon la revendication 5, dans laquelle le corps principal (24) comprend une première coque (24A) et une deuxième coque (24B) ; la première coque (24A) et la deuxième coque (24B) sont en prise de manière correspondante pour former la première partie (242), la deuxième partie (244), la troisième partie (248) et la partie de maintien (246) à l'intérieur de la partie de maintien (246).

7. Structure d'encapsulation de puce (50) selon la revendication 1, dans laquelle une extrémité (562A) de la première partie d'extension (562) et une extrémité (564A) de la deuxième partie d'extension (564), qui sont éloignées de la partie d'enroulement de l'antenne allongée (56), sont adjacentes l'une à l'autre.

8. Structure d'encapsulation de puce (10, 20, 40, 50) selon la revendication 1, dans laquelle la partie d'enroulement (166, 466) de l'antenne allongée (16, 46, 56) est sensiblement rectangulaire ou ronde.

9. Structure d'encapsulation de puce (10, 20, 40, 50) selon la revendication 5, dans laquelle une apparence de la première partie (142, 242, 442) et une apparence de la troisième partie (148, 248, 448) du corps principal (14, 24, 44, 54) sont rectangulaires ou rondes.

10. Structure d'encapsulation de puce (10, 20, 40, 50) selon la revendication 5, dans laquelle le trou traversant (1422, 4422, 4422') de la première partie (142, 242, 442), la partie de maintien (146, 246) située à l'intérieur de la deuxième partie (144, 244, 444), et le trou traversant (1482, 4482, 4482') de la troisième partie (148, 248, 448) ont tous une forme en section transversale d'un rectangle ou d'un cercle.

11. Structure d'encapsulation de puce (10, 20, 40, 50) selon la revendication 5, dans laquelle la première partie (142, 242, 442), la deuxième partie (144, 244, 444) et la troisième partie (148, 248, 448) forment ensemble une fente (150, 250) adaptée pour recevoir la partie d'enroulement (166, 466) de l'antenne allongée (16, 46) ; la fente (150, 250) présente une forme en section transversale d'un arc de cercle, d'un rectangle ou d'un polygone.

12. Structure d'encapsulation de puce (10, 20, 30, 40, 50) selon la revendication 1, dans laquelle le corps principal (14, 24, 34, 44, 54) est constitué d'un élément flexible thermoplastique, qui fond au cours d'un processus de vulcanisation, ce qui atténue une netteté d'angles et d'arêtes du corps principal (14, 24, 34, 44, 54).

13. Structure d'encapsulation de puce (10, 20, 30, 40, 50) selon la revendication 12, dans laquelle l'élément flexible thermoplastique est choisi parmi des plastiques flexibles présentant une dureté Shore A ou D.
